# EUROPEAN PATENT APPLICATION

(11) **EP 2 634 758 A2**
(43) Date of publication of application: **04.09.2013**
(21) Application number: 11836614.5
(22) Date of filing: 26.10.2011
(51) Int. Cl.: G09B 5/06, G09B 15/00, G09B 19/00

(54) **MUSICAL SYSTEM FOR PROMOTING BRAIN HEALTH**

(30) Priority: 27.10.2010 KR 20100105025
(71) Applicant: Postech Academy-Industry- Foundation, Pohang-city, Kyungsangbuk-do 790-784 (KR); Samsung Life Welfare Foundation, Yongsan-gu Seoul 140-210 (KR)
(72) Inventor: YOU, Heecheon, Pohang-si Gyeongsangbuk-do 790-751 (KR); KIM, Yeona, Jeongeup-si Jeollabuk-do 580-050 (KR); KIM, Dongmin, Bucheon-si Gyeonggi-do 420-757 (KR); JEON, Yeonghwan, Seoul 140-727 (KR); KIM, Donghwan, Incheon 403-784 (KR); HONG, Won Gi, Ulsan 683-751 (KR); YANG, Giltae, Goyang-si Gyeonggi-do 411-310 (KR); NA, Duk Lyul, Seoul 135-240 (KR)
(74) Representative: Powell, Timothy John
(86) International application number: PCT/KR2011/008035
(87) International publication number: WO 2012/057522

(57) **Abstract**

A musical brain fitness system according to an exemplary embodiment of the present invention includes: a display device configured to display a visual signal according to selected music; a control box configured to control the display device by receiving input of a user; and a controller including an acceleration sensor, and configured to drive the acceleration sensor according to a movement of the user to transmit a signal to the control box, in which the control box compares the signal received from the controller with a signal controlling the display device, processes the comparison, and outputs a result of the comparison.

## Description

### [Technical Field]

The present invention relates to a fitness system for improving health, and more particularly, to a musical brain fitness system for education of toddlers and children, a family game, or prevention of Alzheimer's disease of senior people.

### [Background Art]

Today, an aging society due to the increase in population has quickly increased in Korea, such that a rate of Alzheimer's disease has increased, of which the number of patients has correspondingly increased. In order to solve the problem, local autonomous entities, and the like have high social interests due to increase in the Alzheimer's disease, such as a plan to expand medical treatment facilities and nursing facilities. It is important to prevent the Alzheimer's disease, as well as treat the Alzheimer's disease, so that interests in a field of preventing the Alzheimer's disease have been increased.

A brain fitness program has been developed as one method of preventing the Alzheimer's disease, so that a training method necessary for a brain to maintain and improve a function at a high level has been provided.

### [Disclosure]

### [Technical Problem]

The present invention has been made in an effort to provide a musical brain fitness system, which supports a user to improve social, emotional, physical, and cognitive abilities by enabling the user to play music by moving a controller according to a visual signal, such as musical notes, output on a display device and feeding back a result of the play.

### [Technical Solution]

An exemplary embodiment of the present invention provides a musical brain fitness system, including: a display device configured to display a visual signal according to selected music; a control box configured to control the display device by receiving input of a user; and a controller including an acceleration sensor, and configured to drive the acceleration sensor according to a movement of the user to transmit a signal to the control box, in which the control box compares the signal received from the controller with a signal controlling the display device, processes the comparison, and outputs a result of the comparison.

The display device may reproduce music in response to driving of the controller, and may be controlled by the control box receiving the signal from the controller to reproduce the music.

The visual signal displayed on the display device may be musical notes sequentially displayed according to the selected music.

The control box may compare the signal received from the controller with a signal controlling the display device and calculate the comparison as a score, and displays the calculated score on the display device.

The control box and the controller may include radio frequency (RF) modules, respectively, to perform wireless communication with each other.

The controller may include an embedded micro processor unit (MPU) to process signal information.

The control box may include an embedded central processor unit (CPU) to process signal information.

The control box may include a database in which music information is stored.

The controller may include an embedded speaker to implement sound according to driving of the acceleration sensor.

The controller may be used by selecting a rod-shaped controller, a tambourine-shaped controller, or a motion band type controller.

### [Advantageous Effects]

According to the exemplary embodiment of the present invention, the musical brain fitness system is possible to improve social, emotional, physical, and cognitive abilities of a user by enabling the user to play music by moving the controller according to musical notes output on the display device and feeding back a result of the play.

Further, the musical brain fitness system may enable the user to follow a motion in accordance with a known song, so that it is possible to exhibit an effect of playing a musical instrument.

### [Description of Drawings]

FIG. 1 is a block diagram schematically illustrating a configuration of a musical brain fitness system according to an exemplary embodiment of the present invention.
FIG. 2 is a flowchart illustrating a process of performing a program by the musical brain fitness system according to the exemplary embodiment of the present invention.
FIG. 3 is a perspective view illustrating a control box configuring the musical brain fitness system according to the exemplary embodiment of the present invention.
FIGS. 4A and 4B are a perspective view and a bottom view illustrating a rod-shaped controller configuring the musical brain fitness system according to the exemplary embodiment of the present invention.
FIGS. 5A and 5B are a perspective view and a bottom view illustrating a tambourine-shaped controller configuring the musical brain fitness system according to the exemplary embodiment of the present invention.
FIG. 6A is a perspective view illustrating a motion band type controller configuring the musical brain fitness system according to the exemplary embodiment of the present invention, and FIG. 6B is a rear view taken along line B-B of FIG. 6A.
FIG. 7 is a view illustrating an example of motions according to each controller and a level of difficulty of the musical brain fitness system according to the exemplary embodiment of the present invention.

### [Mode for Invention]

Hereinafter, the present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. The drawings and description are to be regarded as illustrative in nature and not restrictive. Like reference numerals designate like elements throughout the specification.

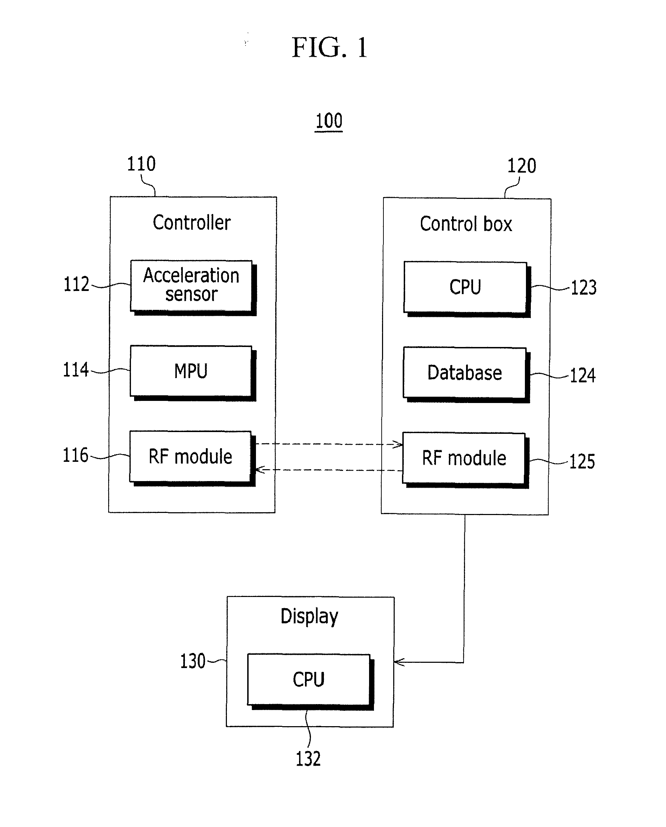

FIG. 1 is a block diagram schematically illustrating a configuration of a musical brain fitness system according to an exemplary embodiment of the present invention.

The musical brain fitness system 100 according to the present exemplary embodiment (hereinafter, abbreviated to as a "system") includes a display device 130 and a control box 120 for controlling the display device 130, and includes a controller 110 which a user may hold with a hand or wear on a wrist and an ankle.

The display device 130 displays a visual signal according to selected music, and the user may input desired information in the control box 120, such as select a desired music. The control box 120 has wired or wireless connection with the display device 130 with which a signal may be transceived to control a screen of the display device 130 according to input information. A visual signal displayed in the display device 130 may be musical note signals sequentially displayed according to the selected music. The control box 120 may include a central processor unit CPU 123 therein to process signal information, and include a database 124 in which music information is stored.

The controller 110 includes an acceleration sensor 112, and transmits a signal to the control box 120 by driving the acceleration sensor 112 according to a motion of the user. The controller 110 may include a micro processor unit (MPU) 114 to process signal information, and the controller 110 and the control box 120 include radio frequency (RF) modules 116 and 125, respectively, to perform wireless communication with each other.

In the meantime, the control box 120 may compare a signal received from the controller 110 and a signal for controlling the display device 130, process the comparison, and output a result of the comparison. That is, the control box 120 may compare the signal received from the controller 110 and the signal for controlling the display device 130 to calculate the comparison as a score, and display the calculated score on the display device 130. Further, the display device 130 may reproduce a music in response to driving of the controller 110, and in this case, the control box 120 receiving the signal from the controller 110 may reproduce the music by controlling the display device 130.

When the system 100 implemented as described above is started, the signal information processed in the CPU 123 of the control box 120 is transmitted to the display device 130 to output a visual signal (image) and an auditory signal (sound) are output. When the user moves the controller 110 in response to the visual signal and the auditory signal, the acceleration sensor 112 senses a motion of the controller 110, the MPU 114 processes the information, and the signal is transmitted to the control box 120 through the RF modules 116 and 125. The information transmitted to the control box 120 is processed by the CPU 123, and the control box 120 transmits a signal for outputting the visual signal, the auditory signal, and a tactile signal to the display device 130 again. The controller 110 vibrates so that the tactile signal may be transmitted to the user, and the CPU 123 is also included in the display device 130 to smoothly perform an operation, such as signal processing.

A method of grading by the control box 120 may employ, for example, a method of calculating a degree, by which an image of musical notes output on the display device 130 is included in a predetermined range (for example, a ratio of the number of pixels included in the predetermined range to the number of pixels of the image of the musical notes), when the movement of the controller 110 is sensed by the acceleration sensor 112 by the CPU 123 of the control box 120 to calculate a score. However, the scope of the present invention is not limited thereto, and various implementation means of digitizing a degree of correspondence between a predetermined range of selected music information and a signal controlled by user's driving and transmitted, and utilizing the digitization for the grading of the score.

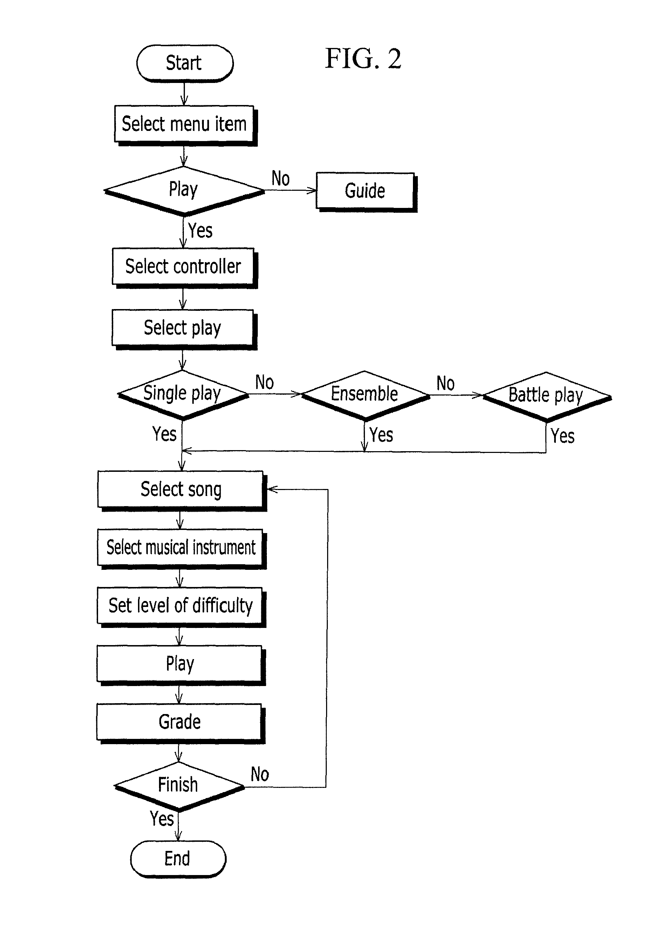

FIG. 2 is a flowchart illustrating a process of performing a program by the musical brain fitness system according to the exemplary embodiment of the present invention.

Referring to FIG. 2, first, a power of the control box 120 is turned on, and a menu item of play or guide is selected. After the play is selected, the controller 110 to be used is selected, and then a play mode is selected. The play mode may include, for example, single play, an ensemble, a play battle.

After the play mode is selected, a song and a musical instrument are sequentially selected, and then a level of difficulty is set to start the play. When the control box 120 moves the musical notes on the display device 130 in accordance with the selected song (music), the play may obtain a score by moving the controller 110 at an appropriate timing. In this case, the score may be different according to accuracy of the timing at which the controller 110 is manipulated, and a level of complexity of a motion to be performed is increased according to the selected level of difficulty.

After the play is completed, a grading result is identified, and a program is finished, or a song is selected again to start another play.

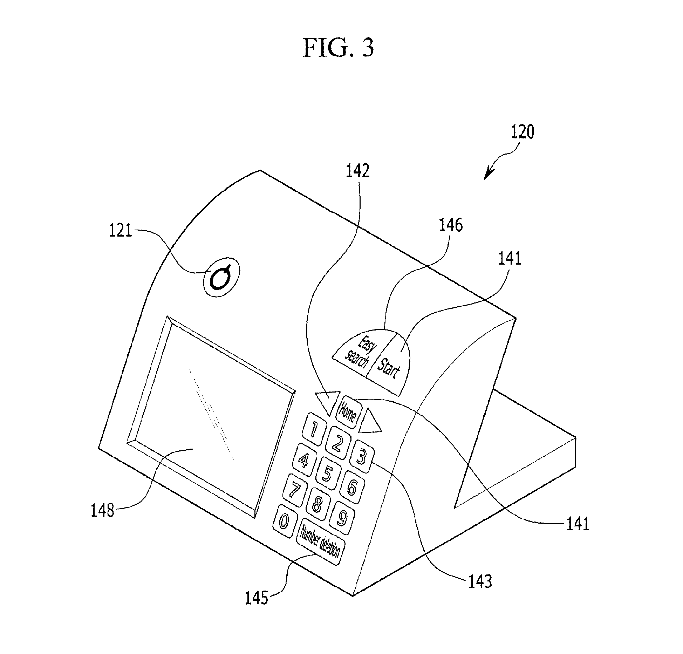

FIG. 3 is a perspective view illustrating a control box configuring the musical brain fitness system according to the exemplary embodiment of the present invention.

Referring to FIG. 3, the control box 120 according to the present exemplary embodiment includes a power button 121 serving to starting/fnishing a program, and a start/stop button 122 for starting or stopping play and a song. The control box 120 may include a home button 141 for returning a state before the play is started to a state where the program is initially started, and left-right selection buttons 142 for left and right movement for the selection when the controller, the play mode, and the song are selected. Further, the control box 120 may include number buttons 143 through which a number may be input so as to select a song by pressing a song number, and a number delete button 145 capable of deleting an input number one by one. Further, the control box 120 may also include an easy search button 146 for executing a mode helping the user to easily select a song, and may further include a display window 148 for displaying necessary information.

In the meantime, the controller 110 may include, for example, a rod-shaped controller, a tambourine-shaped controlled, and a motion band type controller. Hereinafter, the respective controllers will be described with the drawings.

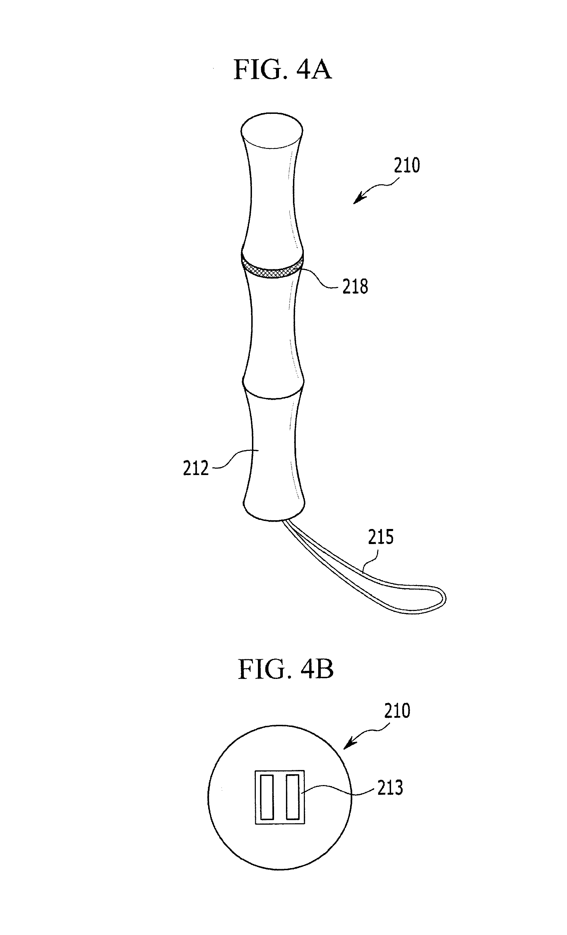

FIGS. 4A and 4B are a perspective view and a bottom view illustrating a rod-shaped controller configuring the musical brain fitness system according to the exemplary embodiment of the present invention.

Referring to FIG. 4A, the rod-shaped controller 210 of the present exemplary embodiment of the present invention has shape of a bamboo stick, and includes a grip 212 made of a rubber and covered at an end of one side so as to be used as a knob. Further, the rod-shaped controller 210 includes a strap 215 so as to prevent the rod-shaped controller 210 from being dropped to the ground even though the user misses the rod-shaped controller 210 held by the hand during performance of the program. Further, the rod-shaped controller 210 includes an embedded speaker 218 to implement sound according to driving of the acceleration sensor.

Referring to FIG. 4B, a charging terminal 213 is formed in a bottom surface of the rod-shaped controller 210 of the present exemplary embodiment, so that power necessary for driving of the embedded MPU, RF module, acceleration sensor, speaker, and the like may be charged.

When the user performs a designated motion, for example, a vertical moving motion, a horizontal moving motion, or a rotating motion, on the rod-shaped controller 210 at a time where a moving musical note displayed through the display device is determined to enter a specific range, the motion is processed according to a predetermined grading method and a signal transmission method.

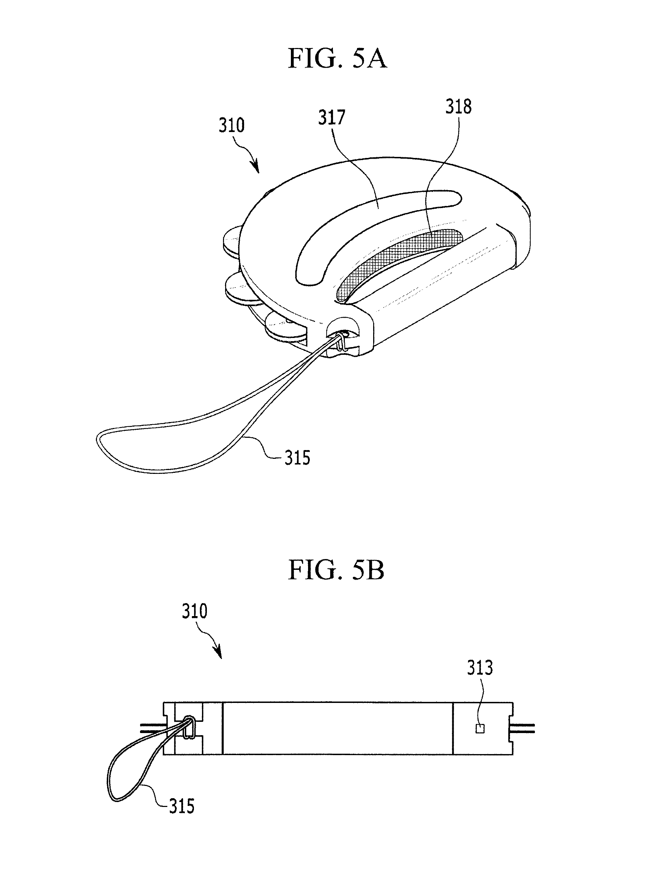

FIGS. 5A and 5B are a perspective view and a bottom view illustrating a tambourine-shaped controller configuring the musical brain fitness system according to the exemplary embodiment of the present invention.

Referring to FIG. 5A, the tambourine-shaped controller 310 of the present exemplary embodiment has a shape of a general tambourine of which one side a grip is formed at, and includes an LED 317 shaped like a crescent moon at a center portion of a side surface to light according to a motion of the user. Further, the tambourine-shaped controller 310 includes a strap 315 so as to prevent the tambourine-shaped controller 310 from being dropped to the ground even though the user misses the tambourine-shaped controller 310 held during the performance of the program from the hand. Further, the tambourine-shaped controller 310 includes a speaker 318 therein to implement sound according to driving of the acceleration sensor.

Referring to FIG. 5B, a charging terminal 313 is formed in a bottom surface of the tambourine-shaped controller 310 of the present exemplary embodiment, so that power necessary for driving of the embedded MPU, RF module, acceleration sensor, speaker, and the like may be charged.

When the user performs a designated motion, for example, a motion of vertically moving and tapping with the hands, a motion of horizontally moving and tapping with the hands, a motion of shaking or rotating, on the tambourine-shaped controller 310 at a time where a musical note displayed through the display device is determined to enter a specific range, the motion is processed according to a predetermined grading method and a signal transmission method.

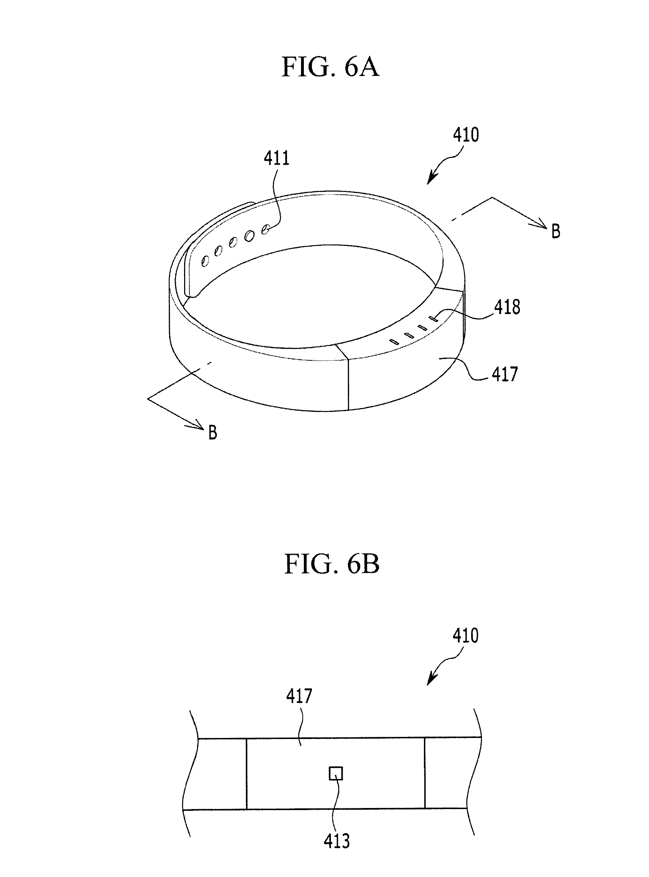

FIG. 6A is a perspective view illustrating a motion band type controller configuring the musical brain fitness system according to the exemplary embodiment of the present invention, and FIG. 6B is a rear view taken along line B-B of FIG. 6A.

Referring to FIG. 6A, the motion band type controller 410 of the present exemplary embodiment has a shape of a band wearable around a wrist or a ankle, and includes a plurality of adjustment openings 411 formed at an end of one side in a lengthwise direction of the band so that the motion band type controller 410 may be fastened to the wrist or the ankle by controlling a size thereof. The motion band type controller 410 includes an LED 417 so as to light according to a movement of the user at a center portion thereof, and includes an embedded speaker 418 in a side surface thereof to implement sound according to driving of the acceleration sensor.

Referring to FIG. 6B, a charging terminal 413 is formed in a bottom surface of the motion band type controller 410 of the present exemplary embodiment, so that power necessary for driving of the embedded MPU, RF module, acceleration sensor, speaker, and the like may be charged.

The aforementioned motion band type controller 410 is divided into the motion band type controller 410 for a wrist and the motion band type controller 410 for an ankle to be provided to the user, and the motion band type controller for the ankle may be formed with a relative larger size than that of the motion band type controller for the wrist. The user may simultaneously wear the motion band type controller for the wrist and the motion band type controller for the ankle to perform the program.

When the user performs a designated motion, for example, a motion of moving one hand, a motion of moving one foot, a motion of moving both hands, a motion of simultaneously moving a hand and a foot, or a jumping motion, in a state where the user wears the motion band type controller 410 on the left or right foot or hand at a time where a moving musical note displayed through the display device 130 is determined to enter a specific range, the motion is processed according to a predetermined grading method and a signal transmission method.

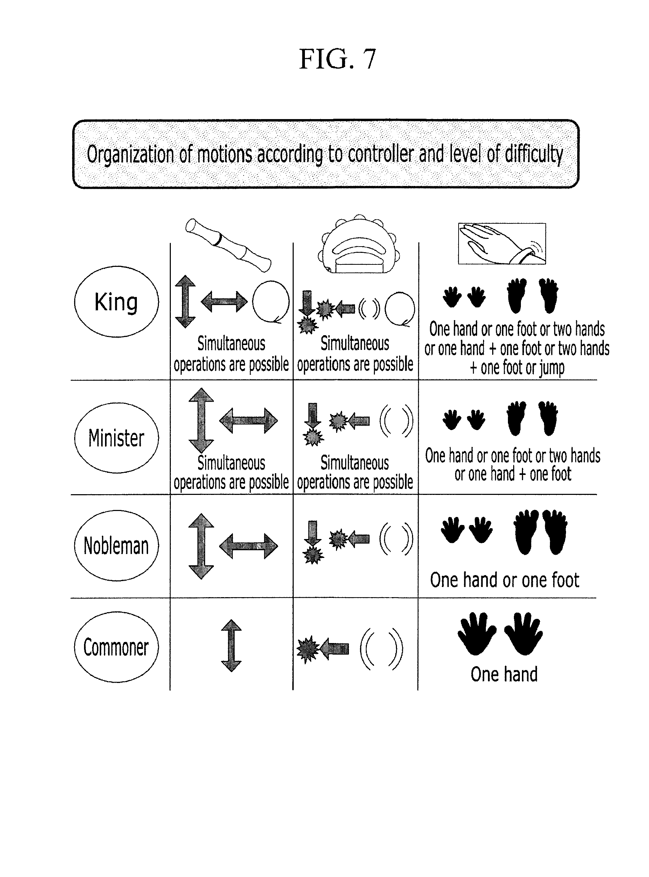

FIG. 7 is a view illustrating an example of motions according to each controller and a level of difficulty of the musical brain fitness system according to the exemplary embodiment of the present invention.

Referring to FIG. 7, a motion to be performed is differently set according to the selected controller, and as a level of difficulty is high, more complex and various motions may be set to be performed.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A musical brain fitness system, comprising:
a display device configured to display a visual signal according to selected music;
a control box configured to control the display device by receiving input of a user; and
a controller including an acceleration sensor, and configured to drive the acceleration sensor according to a movement of the user to transmit a signal to the control box,
wherein the control box compares the signal received from the controller with a signal controlling the display device, processes the comparison, and outputs a result of the comparison.

2. The system of claim 1, wherein:
the display device reproduces music in response to driving of the controller.

3. The system of claim 2, wherein:
the display device is controlled by the control box receiving the signal from the controller to reproduce the music.

4. The system of claim 1, wherein:
the visual signal displayed on the display device is musical notes sequentially displayed according to the selected music.

5. The system of claim 1, wherein:
the control box compares the signal received from the controller with a signal controlling the display device and calculates the comparison as a score, and displays the calculated score on the display device.

6. The system of claim 1, wherein:
the control box and the controller include radio frequency modules, respectively, to perform wireless communication with each other.

7. The system of claim 1, wherein:
the controller includes an embedded micro processor unit (MPU) to process signal information.

8. The system of claim 1, wherein:
the control box includes an embedded central processor unit (CPU) to process signal information.

9. The system of claim 1, wherein:
the control box includes a database in which music information is stored.

10. The system of claim 1, wherein:
the controller includes an embedded speaker to implement sound according to driving of the acceleration sensor.

11. The system of claim 1, wherein:
the controller is a rod-shaped controller.

12. The system of claim 1, wherein:
the controller is a tambourine-shaped controller.

13. The system of claim 1, wherein:
the controller is a motion band type controller.
